# EUROPEAN PATENT SPECIFICATION

(11) **EP 3 689 711 B1**
(45) Date of publication and mention of the grant of the patent: **11.06.2025**
(21) Application number: 18863082.6
(22) Date of filing: 26.09.2018
(51) Int. Cl.: B62D 7/18, B62D 5/04, B62D 7/09

(54) **HUB UNIT EQUIPPED WITH STEERING FUNCTION, AND VEHICLE PROVIDED WITH SAME**
NABENEINHEIT MIT LENKFUNKTION UND DAMIT AUSGESTATTETES FAHRZEUG
UNITÉ DE MOYEU ÉQUIPÉE D'UNE FONCTION DE DIRECTION ET VÉHICULE ÉQUIPÉ DE CETTE DERNIÈRE

(30) Priority: 27.09.2017 JP 2017186441
(43) Date of publication of application: 05.08.2020
(73) Proprietor: NTN Corporation, Osaka-shi, Osaka 550-0003 (JP)
(72) Inventor: OOBA, Hirokazu, Iwata-shi Shizuoka 438-8510 (JP); OHATA, Yusuke, Iwata-shi Shizuoka 438-8510 (JP)
(74) Representative: Maikowski & Ninnemann Patentanwälte Partnerschaft mbB
(86) International application number: PCT/JP2018/035798
(87) International publication number: WO 2019/065781

(56) References cited:
- EP-A1- 1 669 275
- EP-A1- 1 669 275
- EP-A1- 1 757 469
- CN-A- 102 717 696
- CN-A- 106 335 542
- CN-A- 106 741 146
- DE-U1- 202014 010 790
- JP-A- 2007 001 564
- JP-A- 2014 061 744
- US-A- 4 836 577
- US-A1- 2006 266 574
- US-A1- 2009 057 050
- US-A1- 2009 261 550
- US-A1- 2015 232 119

## Description

### BACKGROUND OF THE INVENTION

### (Field of the Invention)

The present invention relates to a turning function-equipped hub unit having a function of performing supplemental turning in addition to turning performed by steering, to a vehicle including the same, as well as to a technique of improving traveling stability and safety of a vehicle.

### (Description of Related Art)

General vehicles include a steering wheel mechanically connected to a turning device, the turning device having two ends connected to left and right wheels through tie rods. Therefore, a turning angle of each of the left and right wheels is determined by a motion of the steering wheel in accordance with an initial setting.

Known vehicle geometries include: (1) "parallel geometry" in which left and right wheels have the same turning angle; and (2) "Ackermann geometry" in which a turning angle of an inner wheel tire is made larger than a turning angle of an outer wheel tire so as to have a single center of turning. In Ackermann geometry, a difference in turning angles of the left and right wheels is set so that the respective wheels turn about a single common point so as to smoothly turn the vehicle when turning in a low-speed range where a centrifugal force is negligible. In contrast, when turning in a high-speed range where a centrifugal force is not negligible, parallel geometry is preferred to Ackermann geometry, since it is desirable that the wheels generate a cornering force in a direction for counterbalancing the centrifugal force.

As mentioned above, since a turning device of a general vehicle is mechanically connected to wheels, the vehicle can usually assume only a single fixed steering geometry and is often configured in an intermediate geometry between Ackermann geometry and parallel geometry. In such a case, however, the turning angle of the outer wheel becomes excessively large in a low-speed range due to an insufficient difference in turning angles of the left and right wheels, whereas the turning angle of the inner wheel becomes excessively large in a high-speed range. Thus, where there is unnecessarily unbalanced distribution of a tire lateral force between inner and outer wheels, travel resistance may be deteriorated, causing worsening of fuel economy and early wear of a tire. Further, there is another problem that the inner and outer wheels cannot not be effectively used, causing deterioration in smooth cornering.

As described above, the vehicle geometries influence traveling stability and safety. For example, Patent Documents 1, 2 propose mechanisms that allow the steering geometries to be changed in accordance with traveling conditions. In Patent Document 1, positions of a knuckle arm and a joint part are relatively changed in order to change the steering geometries. In Patent Document 2, two motors are used to allow both of a toe angle and a camber angle to be changed to arbitrary angles. Further, Patent Document 3 proposes a mechanism for four-wheel independent turning.

### [Related Document]

### [Patent Document]

[Patent Document 1] JP Laid-open Patent Publication No. 2009-226972
[Patent Document 2] DE Patent Application Publication No. 102012206337
[Patent Document 3] JP Laid-open Patent Publication No. 2014-061744

US 2015/232119 discloses a turning function-equipped hub unit comprising a hub-bearing-part assembly component including a hub bearing configured to support a wheel of a vehicle; and a turning actuator, wherein the hub-bearing-part assembly component is configured to be mounted on a unit support member of a suspension device for supporting the wheel so as to be rotatable about a turning axis extending in a vertical direction, and the turning actuator is configured to be mounted on the unit support member so as to rotate the hub-bearing-part assembly component about the turning axis,the hub-bearing-part assembly component is mounted on the unit support member via two rotation permitting support components provided above and below the hub-bearing-part assembly component so as to be rotatable about the turning axis.

### SUMMARY OF THE INVENTION

By changing a turning angle of a wheel in accordance with a vehicle speed and/or a turning acceleration while driving to arbitrarily select Ackermann geometry in a low speed range and parallel geometry in a high speed range, it is possible to achieve both of smooth turnability at low speed and cornering performance at high speed without increasing traveling resistance.

In Patent Document 1, positions of a knuckle arm and a joint part are relatively changed in order to change the steering geometries. It is, however, extremely difficult to provide an actuator that can provide such a large force that the vehicle geometries can be changed in such parts, due to space constraints. In addition, since a change made at this location would only cause a small change in the tire angles, it is necessary to greatly operate the actuator so as to cause a large change in the vehicle geometry in order to obtain a large effect. In Patent Document 2, although use of two motors makes it possible to change both of a toe angle and a camber angle to arbitrary angles, this control is complicated. Also, a spherical ball bearing having a large diameter is provided in order to support a hub bearing part, which increases the weight. In Patent Document 3, a hub bearing is supported in a cantilever manner with respect to a turning shaft. This configuration reduces rigidity, and a steering geometry may be changed due to generation of turning acceleration.

As in the examples described above, a complicated structure is required in order to arbitrarily change a toe angle and/or a camber angle of a tire in a vehicle, resulting in an increased number of components. This makes it difficult to ensure rigidity, and, in order to ensure rigidity, it is necessary to increase the size of the device, resulting in an increase in weight.

An object of the present invention is to provide a turning function-equipped hub unit that is capable of solving the above problem and independently performing supplemental turning in left and right wheels in accordance with traveling conditions while driving in order to improve motion performance of a vehicle and to travel stably and safely, and can have a simple configuration without reducing rigidity of the hub unit as a whole, as well as a vehicle including the same.

A turning function-equipped hub unit of the present invention is as defined in claim

According to the turning function-equipped hub unit having this configuration, the hub-bearing-part assembly component configured to support the wheel is supported at two positions above and below the assembly component as to be rotatable about the turning axis extending in the vertical direction, and the hub unit is provided with the turning actuator. Thus, supplemental turning can be independently performed in accordance with traveling conditions of the vehicle to left and right wheels while driving, making it possible to improve motion performance of the vehicle and to travel stably and safely. This also enhances fuel economy.

Although there would be a problem in ensuring rigidity of the turning function-equipped hub unit due to its configuration that allows supplemental turning to be performed, it is possible to enhance rigidity, thanks to the configuration in which the turning actuator is configured to be mounted on the unit support member of the vehicle, which has high rigidity, and in which the hub-bearing-part assembly component is configured to be mounted on the same unit support member.

Since the turning by the turning function-equipped hub unit is separately performed from the turning by the turning device, the turning function-equipped hub unit requires only a small angle within a few degrees as a turnable angle. Thus, even if the turning actuator cannot be operated due to a failure of a power supply, it is possible to use the turning device to steer the vehicle to a safe place where it can be parked.

In the present invention, the unit support member may include a knuckle. Although the turning function-equipped hub unit of the present invention may be used to support either of a turning wheel and a non-turning wheel, the turning function-equipped hub unit is mounted on a knuckle in cases where it is used to support a turning wheel. In such a case, the turning function-equipped hub unit corrects a turning angle of the turning wheel which is turned by the turning device through an operation of a steering wheel. Where the turning function-equipped hub unit is mounted on the knuckle, the turning axis may be coaxial with a king pin axis that is a rotation center of the knuckle. In cases where the turning function-equipped hub unit of the present invention is used to support a non-turning wheel, the turning function-equipped hub unit performs, for example, turning of rear wheels as supplementary turning in a vehicle that performs turning of front wheels through e.g. an operation of a steering wheel.

In the present invention, the hub-bearing-part assembly component may be disposed so as to protrude outward in a widthwise direction of the vehicle with respect to the unit support member, and the turning actuator may be disposed so as to protrude inward in the widthwise direction of the vehicle. In such a manner, where the hub-bearing-part assembly component and the turning actuator are separately disposed outside and inside the unit support member, respectively, the turning function-equipped hub unit can be effectively arranged in a space around the unit support member. Additionally, the turning actuator is located inside the unit support member in the widthwise direction of the vehicle so that wiring for an electric motor and a sensor etc. for the turning actuator can be installed without causing interference with other components.

The hub-bearing-part assembly component and the turning actuator may be coupled to each other only through a joint part configured to transmit a motion of the turning actuator to the hub-bearing-part assembly component. Since the hub-bearing-part assembly component and the turning actuator are coupled to each other only through the joint part, and the turning actuator and the hub-bearing-part assembly component are independently mounted on the unit support member, the effect of enhancing rigidity can be further reinforced.

In this configuration, the hub-bearing-part assembly component may include an arm part protruding in a direction perpendicular to the turning axis, and the arm part may be coupled to a linear output part of the turning actuator, the linear output part being configured to advance and retreat. Thus, provision of the arm part makes it possible to effectively transmit a motion of turning by the turning actuator that is mounted on the unit support member separately from the hub-bearing-part assembly component, with a simple configuration.

A vehicle according to the present invention includes a turning function-equipped hub unit according to one of the above configurations of the present invention. Thus, supplemental turning can be performed in accordance with traveling conditions of the vehicle independently to left and right wheels while driving, making it possible to improve motion performance of the vehicle and to travel stably and safely. In addition, it is possible to provide a mechanism having a turning function, while preventing a decrease in rigidity.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views. In the figures,
Fig. 1 is a longitudinal section view illustrating a supplemental turning function-equipped hub unit according to an embodiment of the present invention and surrounding features;
Fig. 2 is a horizontal section view illustrating the same supplemental turning function-equipped hub unit and the surrounding features;
Fig. 3 is a perspective view illustrating an external appearance of the same supplemental turning function-equipped hub unit;
Fig. 4 is an exploded front view of the same supplemental turning function-equipped hub unit;
Fig. 5 is a plan view of the same supplemental turning function-equipped hub unit;
Fig. 6 is a plan view of the same supplemental turning function-equipped hub unit;
Fig. 7 is a sectional view along line VII-VII in Fig. 5;
Fig. 8 is a schematic plan view illustrating an example of a vehicle including a supplemental turning function-equipped hub unit according to the same embodiment; and
Fig. 9 is a schematic plan view illustrating another example of a vehicle including a supplemental turning function-equipped hub unit according to the same embodiment.

### DESCRIPTION OF THE EMBODIMENTS

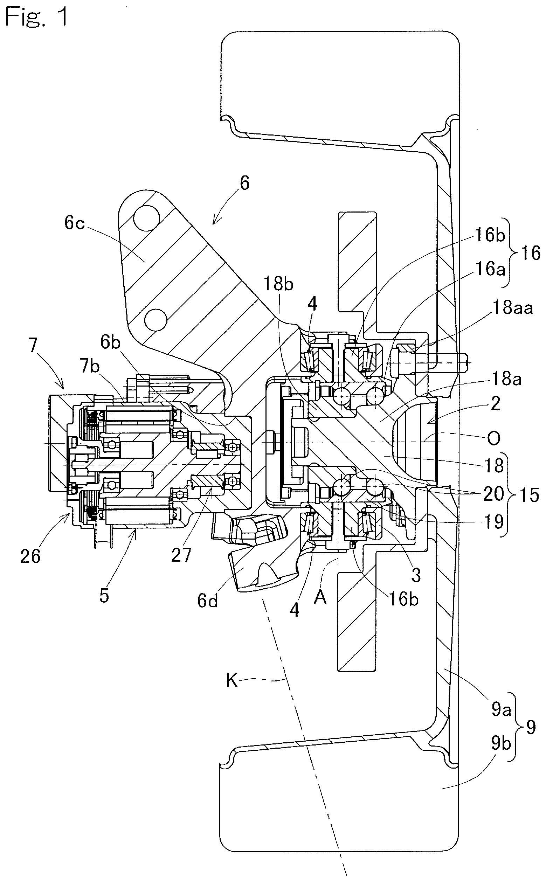

A turning function-equipped hub unit according to an embodiment of the present invention will be described with reference to Fig. 1 to Fig. 8.

### Schematic Structure of Turning Function-Equipped Hub Unit

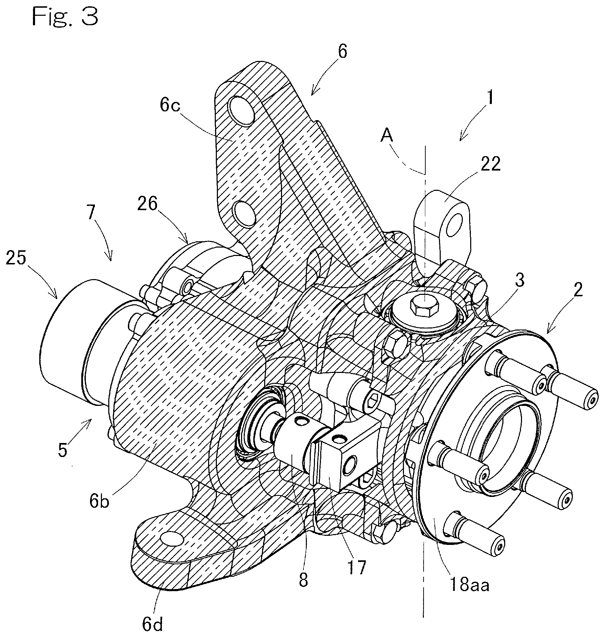

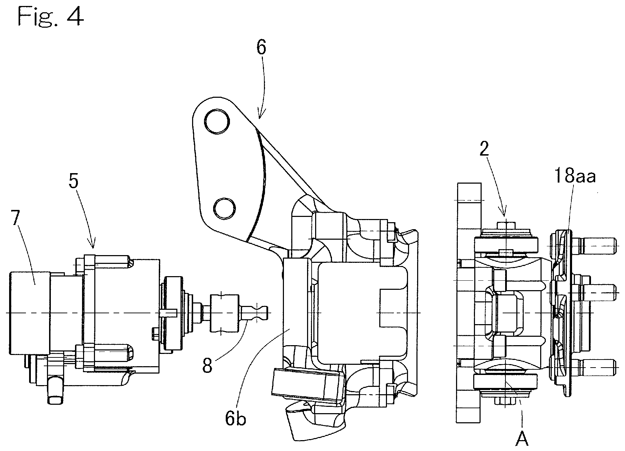

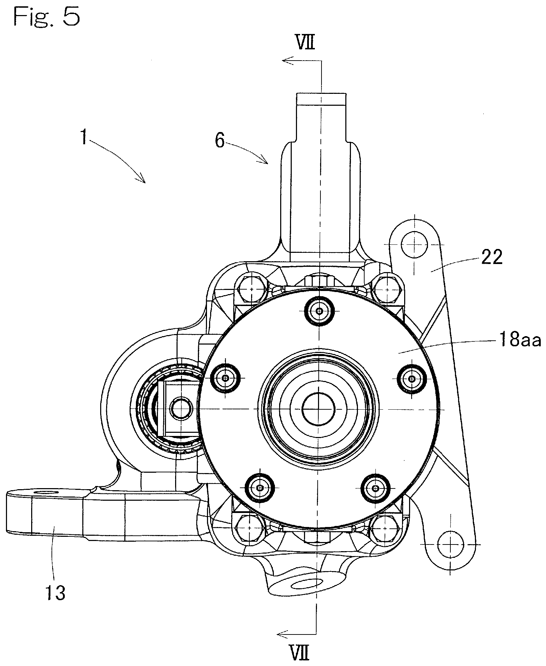

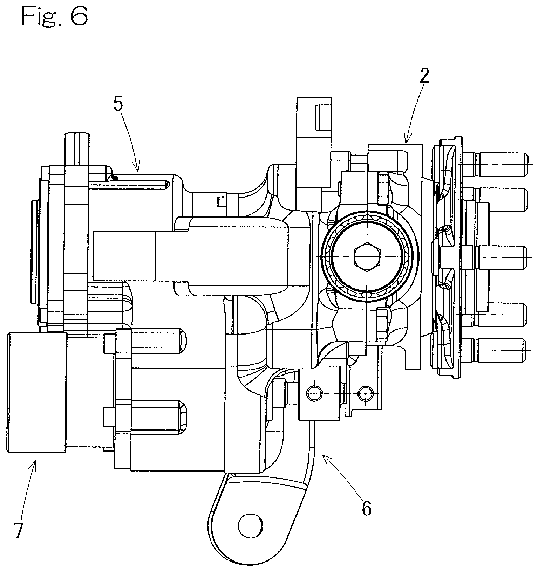

As shown in the exploded view of Fig. 4, the turning function-equipped hub unit (supplemental turning function-equipped hub unit; hereinafter, simply referred to as "hub unit") 1 includes a hub-bearing-part assembly component 2 and a supplemental turning actuator 5. The hub-bearing-part assembly component 2 and the supplemental turning actuator 5 are assembled onto respective surfaces of a knuckle 6 that serves as a unit support member of a suspension device, as shown in Fig. 3 illustrating the appearance. In Fig. 3, the area hatched with chain lines indicates the knuckle 6 and the hub-bearing-part assembly component 2. Fig. 5 illustrates the hub unit 1 viewed from a wheel side, and Fig. 6 shows a view of Fig. 3 when seen from directly above.

As shown in Fig. 1, the hub-bearing-part assembly component 2 is mounted on the knuckle 6 via two rotation permitting support components 4, 4 provided above and below the assembly component so as to be rotatable about a turning axis (supplemental turning axis A) extending in a vertical direction. The supplemental turning actuator 5 is mounted on the knuckle 6 so as to rotate the hub-bearing-part assembly component 2 about the supplemental turning axis A. The hub-bearing-part assembly component 2 is disposed so as to protrude outward (toward an outboard side) in a widthwise direction of a vehicle with respect to the knuckle 6, and the supplemental turning actuator 5 is disposed so as to protrude inward (toward an inboard side) in the widthwise direction of the vehicle.

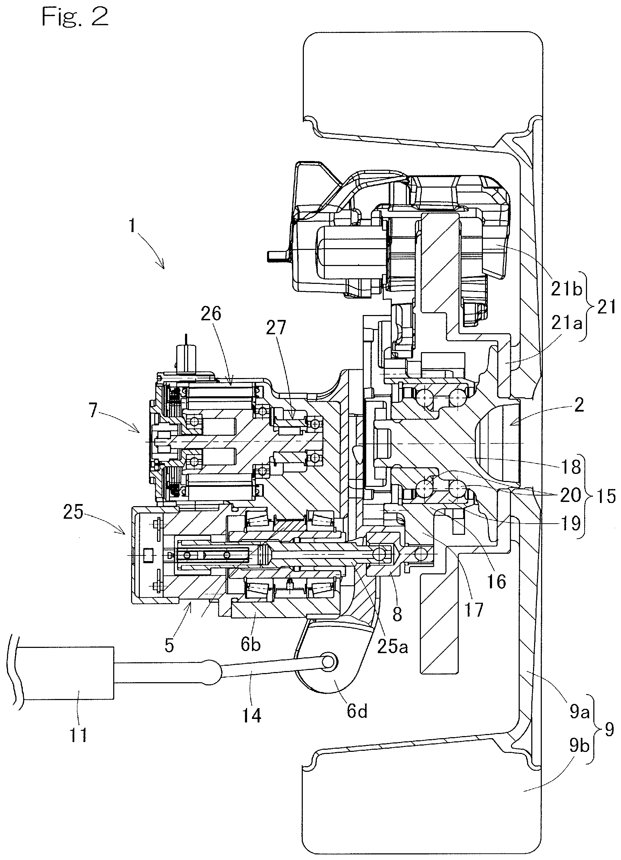

The hub-bearing-part assembly component 2 and the supplemental turning actuator 5 are coupled to each other only through a joint part 8 (see Fig. 2, Fig. 3) configured to transmit a motion of the supplemental turning actuator 5 to the hub-bearing-part assembly component 2. It should be noted that the outboard side refers to an outer side in the widthwise direction of the vehicle, and the inboard side refers to an inner side in the widthwise direction of the vehicle, in a state where the hub unit 1 is installed in the vehicle.

### Mount Position of Hub Unit 1

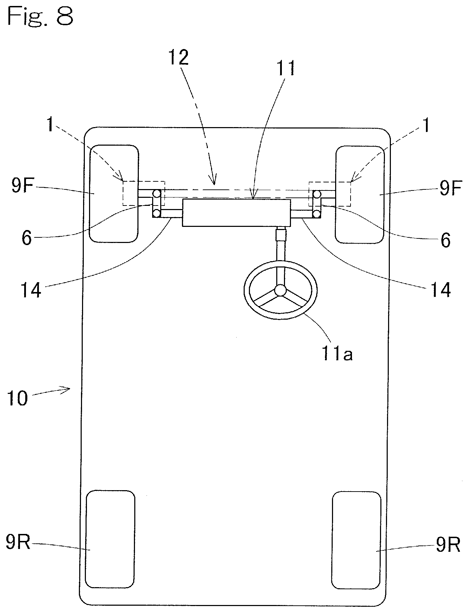

The hub unit 1 is a mechanism configured to perform individual turning of each of the left and right wheels by a minute angle (about ±5 deg), in addition to the turning of turning wheels, i.e., front wheels 9F of the vehicle 10 as specifically shown in Fig. 8, performed by a vehicle steering device 11 in this embodiment. The hub unit 1 is integrally provided on the knuckle 6 of the suspension device 12.

The vehicle steering device 11 operates in accordance with an operation of a steering wheel 11a by a driver and/or a command from an automatic drive device or a drive assist device, and a tie rod 14 configured to advance and retreat is connected to a steering joint part 6d (Fig. 2) provided to the knuckle 6. Although the vehicle steering device 11 is described herein as, for example, a rack and pinion type, it may be of any type. Although the suspension device 12 is described herein as, for example, a strut type suspension mechanism, it may be of other type, such as a multi-link type suspension mechanism.

A typical vehicle has a king pin angle of 10 to 20 degree in order to improve linear motion stability of vehicle traveling. In this embodiment, the supplemental turning function-equipped hub unit 1 has a supplemental turning axis A having a different angle (axis) from the king pin axis K (Fig. 1) so that the supplemental turning actuator 5 can arbitrarily change the angle of the hub-bearing-part assembly component 2 relative to the knuckle 6 while driving.

### Hub-Bearing-Part Assembly Component 2

The hub-bearing-part assembly component 2 includes a hub bearing 15, an outer ring 16, and a brake caliper attachment part 22 (see Fig. 3, Fig. 5) that are integrally formed as a single assembly component and integrally turn with each other.

The hub bearing 15 includes: an inner race 18 that also serves as a hub axle; an outer race 19 that is a stationary ring; and rolling elements 20, such as balls, interposed between the inner and outer races 18, 19, and the hub bearing 15 rotates about a rotation axis O. The hub bearing 15 serves to connect a member on a vehicle body side and a wheel 9 and to smoothly rotate the wheel 9. The inner race 18 includes: a hub axle part 18a that has a hub flange 18aa and forms a raceway surface on the outboard side; and an inner race part 18b that forms a raceway surface on the inboard side.

As shown in Fig. 1, a wheel body 9a of the wheel 9 is fixed to the hub flange 18aa by a bolt such that the wheel body 9a is overlapped with a brake rotor 21a. The wheel body 9a has an outer periphery provided with a tire 9b.

As shown in Fig. 2, the brake 21 includes the brake rotor 21a and a brake caliper 21b. The brake caliper 21b is mounted on two brake caliper attachment parts 22 (Fig. 3, Fig. 5) that are integrally formed with the outer race 19 on upper and lower parts thereof so as to protrude in an arm-like manner.

The outer ring 16 includes: an annular part 16a fitted to an outer peripheral surface of the outer race 19 of the hub bearing 15; and attachment shaft parts 16b each having a trunnion shaft shape, the attachment shaft parts being provided so as to protrude upwardly and downwardly from an outer periphery of the annular part 16a. Each of the attachment shaft parts 16b is provided so as to be coaxial with the supplemental turning axis A.

### Rotation permitting Support Component 4

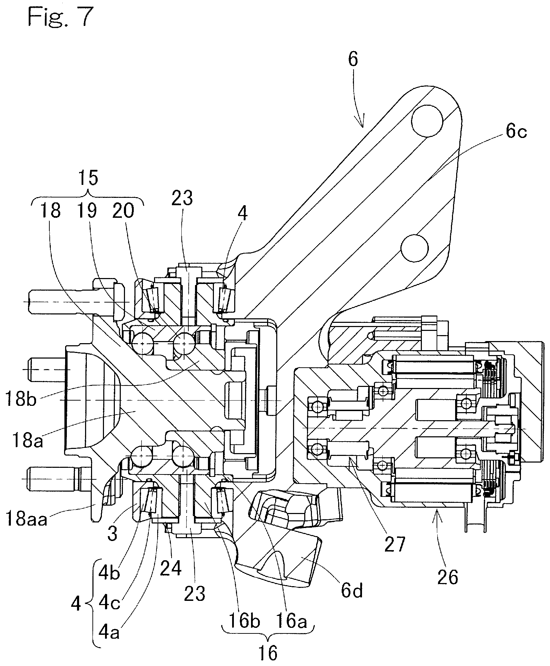

The rotation permitting support components 4 are constituted by rolling bearings. As shown in Fig. 7, each of the rolling bearings used as the rotation permitting support components 4 includes an inner race 4a, an outer race 4b, and rolling elements 4c arranged in double rows and interposed between the inner and outer races 4a, 4b. The inner races 4a are fitted to the outer peripheries of the attachment shaft parts 16b provided to the outer ring 16. The outer races 4b are fitted to bearing fitting parts provided to the knuckle 6.

In this example, tapered roller bearings are used as the rolling bearings that serve as the rotation permitting support components 4 in order to apply preload to the structure. The bearings are set in such a way that the preload is maintained even when the weight of the vehicle acts on the supplemental turning function-equipped hub unit 1. Specifically, each of the attachment shaft parts 16b are formed with an internal thread portion extending in a radial direction, and a bolt 23 is screwed into the internal thread portion. Each of the rotation permitting support components 4 is preloaded by interposing a pressing member 24 having a disk shape at an end face of the inner race 4a and applying a pressing force onto the end face of the inner race 4a through the bolt 23 screwed into the internal thread portion. This makes it possible to improve rigidity of each of the rotation permitting support components 4. The rotation permitting support components 4 are not limited to tapered roller bearings and may be angular ball bearings in accordance with use conditions, such as maximum load. Also, the rotation permitting support components 4 are not limited to rolling bearings and may be sliding bearings, such as spherical bearings.

### Knuckle Divided Body 3

The knuckle 6 has a distal end part that is divided as a knuckle divided body 3 with respect to the center of the bearing fitting parts to which the outer races 4b of the rotation permitting support components 4 are fitted. The knuckle divided body 3 is fastened to a main body of the knuckle 6 by a bolt. This configuration makes it possible to incorporate the trunnion-like attachment shaft parts 16b of the hub-bearing-part assembly component 2 into the bearing fitting parts of the knuckle 6. It should be noted that where there is no problem with incorporation into the knuckle 6 in a rotation support structure, it is not necessary to divide a part of the knuckle 6 to form the knuckle divided body 3.

### Arm Part 17

As shown in Fig. 2, an arm part 17 is integrally provided with a part of the outer periphery of the outer ring 16 of the hub-bearing-part assembly component 2 so as to protrude therefrom. The arm part 17 is rotatably coupled to a linear output part 25a of the supplemental turning actuator 5 through the joint part 8. This coupling structure allows the linear output part 25a of the supplemental turning actuator 5 to advance and retreat so that the hub-bearing-part assembly component 2 is caused to rotate about the supplemental turning axis A (Fig. 1), i.e., to perform supplementary turning.

### Supplemental Turning Actuator 5

As shown in Fig. 1, the supplemental turning actuator 5 includes an actuator main body 7 configured to rotationally drive the hub-bearing-part assembly component 2 about the supplemental turning axis A and a casing 7b that covers a part (substantially all) of the actuator main body 7. The supplemental turning actuator 5 is partially fitted to an attachment recess 6b provided to the knuckle 6 by e.g. a bolt (not illustrated). As shown in Fig. 2, the actuator main body 7 includes a motor 26, a speed reducer 27 configured to reduce the speed of rotation of the motor 26, and a linear motion mechanism 25 configured to convert a forward/reverse rotation output from the speed reducer 27 into a reciprocating linear motion of the linear output part 25a. The motor 26 is, for example, a permanent magnet synchronous motor, or may be a direct current motor or an induction motor.

The speed reducer 27 may be a winding-type transmission mechanism, such as a belt transmission mechanism, or a gear train. In the example of Fig. 2, a belt transmission mechanism is used. The linear motion mechanism 25 may be a feed screw mechanism, such as a sliding screw and a ball screw, or a rack and pinion mechanism. In this example, a feed screw mechanism with a trapezoid sliding screw is used. The actuator main body 7 including the motor 26, the speed reducer 27 and the linear motion mechanism 25 is assembled as a semi-assembled product and is removably mounted to the casing 7b by e.g. a bolt. It is also possible to use a mechanism that directly transmits a driving force from the motor 26 to the linear motion mechanism 25 without involving a speed reducer.

### Effects

The hub unit 1 has a supplementary turning axis A different from the king pin axis that is the center of a rotation of the knuckle caused by the steering device, and the hub-bearing-part assembly component 2 is rotatably held at its upper and lower end portions at the supplementary turning axis A. In addition, the supplemental turning actuator 5 disposed in the hub unit 1 allows the hub unit to rotationally operate about the supplementary turning axis A. This makes it possible to arbitrarily change a toe angle of the tire 9b of the wheel 9 mounted to the hub unit 1, with a single configuration. Capability of arbitrarily changing the angles of the left and right wheels independently in accordance with traveling conditions of the vehicle makes it possible to improve motion performance of the vehicle such that the vehicle can travel stably and safely. Further, it is possible to enhance fuel economy by setting an appropriate toe angle.

In particular, since the hub unit 1 has a configuration that the hub-bearing-part assembly component 2 is mounted on the knuckle 6 having high rigidity, and the supplemental turning actuator 5 including the speed reducer part is also mounted on the same knuckle 6, the hub unit can have a simple configuration without reducing rigidity of the entire hub unit.

Further, the hub unit 1 is used to independently adjust the left and right tires by minute angles (about ±5 deg). Therefore, even when the vehicle loses the function of the hub unit 1 of this invention while driving, the vehicle can be pulled over to a safe location by operating the steering wheel, which ensures safety.

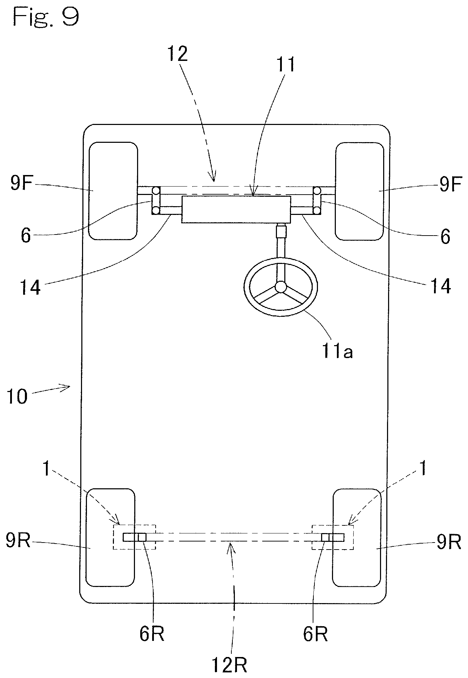

It should be noted that although the above embodiment is described with reference to the case where the hub unit 1 is mounted to the knuckle 6 of the suspension device 12 supporting the front wheels 9F that are turning wheels, the supplemental turning function-equipped hub unit of the present invention may also be used for non-turning wheels. For example, as shown in Fig. 9, the hub unit may be used as each of unit support members 6R that serves as wheel bearing mount parts of a suspension device 12R supporting rear wheels in a vehicle 10 of front-wheel turning type to be perform rear wheel turning.

Although the present invention has been described in terms of the embodiments thereof for carrying out the invention, the embodiments disclosed herein are merely examples in all respects, and are not to be taken as limiting the scope of the present invention in any way whatsoever. The scope of the present invention is to be determined by the appended claims, not by the above description, and is intended to include any change made within the scope of claims or equivalent thereto.

### [Reference Numerals]

- 1: supplemental turning function-equipped hub unit
- 2: hub-bearing-part assembly component
- 4: rotation permitting support component
- 5: supplemental turning actuator
- 6: unit support member (knuckle)
- 6R: unit support member
- 7: actuator main body
- 8: joint part
- 10: vehicle
- 12, 12R: suspension device
- 15: hub bearing
- 25a: linear output part

## Claims

1. A turning function-equipped hub unit (1) comprising:
a hub-bearing-part assembly component (2) including a hub bearing (15) configured to support a wheel of a vehicle (10); and
a turning actuator (5),
wherein the hub-bearing-part assembly component (2) is configured to be mounted on a unit support member (6) of a suspension device (12, 12R) for supporting the wheel so as to be rotatable about a turning axis (A) extending in a vertical direction, and
the turning actuator (5) is configured to be mounted on the unit support member (6) so as to rotate the hub-bearing-part assembly component (2) about the turning axis (A),
the hub-bearing-part assembly component (2) is mounted on the unit support member (6) via two rotation permitting support components (4) provided above and below the hub-bearing-part assembly component (2) so as to be rotatable about the turning axis (A),
the hub-bearing-part assembly component (2) includes the hub bearing (15), an outer ring (16), and a brake caliper attachment part (22) that are integrally formed as a single assembly component,
the outer ring (16) includes: an annular part (16a) fitted to an outer peripheral surface of an outer race (19) of the hub bearing (15); and attachment shaft parts (16b) each having a trunnion shaft shape, the attachment shaft parts (16b) being provided so as to protrude upwardly and downwardly from an outer periphery of the annular part (16a), and each of the attachment shaft parts (16b) being provided so as to be coaxial with the turning axis (A),
each of rolling bearings that serve as the rotation permitting support components (4) includes an inner race (4a), an outer race (4b), and rolling elements (4c) arranged in double rows and interposed between the inner and outer races (4a, 4b), the inner races (4a) being fitted to the outer peripheries of the attachment shaft parts (16b) provided to the outer ring (16), and the outer races (4b) being fitted to bearing fitting parts provided to the unit support member (6), and
each of the rotation permitting support components (4) is preloaded.

2. The turning function-equipped hub unit (1) as claimed in claim 1, wherein the unit support member (6) includes a knuckle.

3. The turning function-equipped hub unit (1) as claimed in claim 1 or 2, wherein the hub-bearing-part assembly component (2) is disposed so as to protrude outward in a widthwise direction of a vehicle (10) with respect to the unit support member (6), and the turning actuator (5) is disposed so as to protrude inward in the widthwise direction of the vehicle (10).

4. The turning function-equipped hub unit (1) as claimed in any one of claims 1 to 3, wherein the hub-bearing-part assembly component (2) and the turning actuator (5) are directly coupled to each other only through a joint part (8) configured to transmit a motion of the turning actuator (5) to the hub-bearing-part assembly component (2).

5. The turning function-equipped hub unit (1) as claimed in claim 4, wherein the hub-bearing-part assembly component (2) includes an arm part protruding in a direction perpendicular to the turning axis (A), and the arm part is coupled to a linear output part (25a) of the turning actuator (5), the linear output part (25a) being configured to advance and retreat.

6. A vehicle (10) comprising a turning function-equipped hub unit (1) as claimed in any one of claims 1 to 5.

## Patentansprüche

1. Mit einer Drehfunktion ausgestattete Nabeneinheit (1), umfassend:
eine Nabenlagerteil-Komponente (2), die ein Nabenlager (15) enthält, das dazu ausgelegt ist, ein Rad eines Fahrzeugs (10) zu lagern; und
ein Drehstellglied (5),
wobei die Nabenlagerteil-Komponente (2) dazu ausgelegt ist, an einem Einheitsträgerelement (6) einer Aufhängungsvorrichtung (12, 12R) zum Lagern des Rades so montiert zu werden, dass sie um eine Drehachse (A) rotieren kann, die sich in einer vertikalen Richtung erstreckt, und
wobei das Drehstellglied (5) dazu ausgelegt ist, an dem Einheitsträgerelement (6) so montiert zu werden, dass es die Nabenlagerteil-Komponente (2) in Rotation um die Drehachse (A) versetzt,
wobei die Nabenlagerteil-Komponente (2) an dem Einheitsträgerelement (6) über zwei eine Rotation zulassende Stützkomponenten (4) montiert ist, die oberhalb und unterhalb der Nabenlagerteil-Komponente (2) vorgesehen sind, so dass sie um die Drehachse (A) rotieren kann,
wobei die Nabenlagerteil-Komponente (2) das Nabenlager (15), einen äußeren Ring (16) und ein Bremssattel-Befestigungsteil (22) umfasst, die integral als eine einzige Komponente ausgebildet sind,
wobei der äußere Ring (16) umfasst: ein ringförmiges Teil (16a), das an einer äußeren Umfangsfläche eines Außenrings (19) des Nabenlagers (15) angebracht ist; und Befestigungswellenteile (16b), die jeweils eine Zapfenwellenform haben, wobei die Befestigungswellenteile (16b) so vorgesehen sind, dass sie von einem Außenumfang des ringförmigen Teils (16a) nach oben und nach unten ragen, und jedes der Befestigungswellenteile (16b) so vorgesehen ist, dass es koaxial mit der Drehachse (A) verläuft,
wobei jedes der Wälzlager, die als die eine Rotation zulassenden Stützkomponenten (4) dienen, einen Innenring (4a), einen Außenring (4b) und Wälzkörper (4c) umfasst, die in Doppelreihen angeordnet und zwischen dem Innen- und dem Außenring (4a, 4b) eingefügt sind, wobei die Innenringe (4a) an den äußeren Umfängen der Befestigungswellenteile (16b) angebracht sind, die an dem äußeren Ring (16) vorgesehen sind, und die Außenringe (4b) an Lageranschlussteilen angebracht sind, die an dem Einheitsträgerelement (6) vorgesehen sind, und
jede der eine Rotation zulassenden Stützkomponenten (4) vorgespannt ist.

2. Mit einer Drehfunktion ausgestattete Nabeneinheit (1) nach Anspruch 1, wobei das Einheitsträgerelement (6) einen Achsschenkel umfasst.

3. Mit einer Drehfunktion ausgestattete Nabeneinheit (1) nach Anspruch 1 oder 2, wobei die Nabenlagerteil-Komponente (2) so angeordnet ist, dass sie in einer Breitenrichtung eines Fahrzeugs (10) in Bezug auf das Einheitsträgerelement (6) nach außen ragt, und das Drehstellglied (5) so angeordnet ist, dass er in der Breitenrichtung des Fahrzeugs (10) nach innen ragt.

4. Mit einer Drehfunktion ausgestattete Nabeneinheit (1) nach einem der Ansprüche 1 bis 3, wobei die Nabenlagerteil-Komponente (2) und das Drehstellglied (5) nur über ein Verbindungsteil (8) zum Übertragen einer Bewegung des Drehstellglieds (5) auf die Nabenlagerteil-Komponente (2) direkt miteinander gekoppelt sind.

5. Mit einer Drehfunktion ausgestattete Nabeneinheit (1) nach Anspruch 4, wobei die Nabenlagerteil-Komponente (2) einen Armabschnitt enthält, der in einer Richtung senkrecht zur Drehachse (A) ragt, und der Armabschnitt mit einem Linearabtriebsteil (25a) des Drehstellglieds (5) gekoppelt ist, wobei das Linearabtriebsteil (25a) dazu ausgelegt ist, ein- und ausgefahren zu werden.

6. Fahrzeug (10) mit einer mit einer Drehfunktion ausgestatteten Nabeneinheit (1) nach einem der Ansprüche 1 bis 5.

## Revendications

1. Unité de moyeu équipée d'une fonction de rotation (1) comprenant :
un composant d'assemblage de moyeu-pièce de palier (2) comportant un palier de moyeu (15) configuré pour supporter une roue d'un véhicule (10) ; et
un actionneur de rotation (5),
dans laquelle le composant d'assemblage de moyeu-pièce de palier (2) est configuré pour être monté sur un élément de support d'unité (6) d'un dispositif de suspension (12, 12R) pour supporter la roue de manière à pouvoir tourner autour d'un axe de rotation (A) s'étendant dans une direction verticale, et
l'actionneur de rotation (5) est configuré pour être monté sur l'élément de support d'unité (6) de manière à faire tourner le composant d'assemblage de moyeu-pièce de palier (2) autour de l'axe de rotation (A),
le composant d'assemblage de moyeu-pièce de palier (2) est monté sur l'élément de support d'unité (6) par l'intermédiaire de deux composants de support permettant la rotation (4) prévus au-dessus et en dessous du composant d'assemblage de moyeu-pièce de palier (2) de manière à pouvoir être tourné autour de l'axe de rotation (A),
le composant d'assemblage de moyeu-pièce de palier (2) comporte le palier de moyeu (15), une bague extérieure (16), et une pièce de fixation d'étrier de frein (22) qui sont formés d'un seul tenant en tant qu'un composant d'assemblage unique,
la bague extérieure (16) comporte : une pièce annulaire (16a) ajustée sur une surface périphérique extérieure d'une bague de roulement extérieure (19) du palier de moyeu (15) ; et des pièces d'arbre de fixation (16b) présentant chacune une forme d'arbre de tourillon, les pièces d'arbre de fixation (16b) étant prévues de manière à faire saillie vers le haut et vers le bas depuis une périphérie extérieure de la pièce annulaire (16a), et chacune des pièces d'arbre de fixation (16b) étant prévue de manière à être coaxiale par rapport à l'axe de rotation (A),
chacun des paliers de roulement qui font office de composants de support permettant la rotation (4) comporte une bague de roulement intérieure (4a), une bague de roulement extérieure (4b) et des éléments de roulement (4c) disposés en doubles rangées et intercalés entre les bagues de roulement intérieure et extérieure (4a, 4b), les bagues de roulement intérieures (4a) étant ajustées sur les périphéries extérieures des pièces d'arbre de fixation (16b) prévues sur la bague extérieure (16), et les autres bagues de roulement extérieures (4b) étant ajustées sur des pièces d'ajustement de palier prévues sur l'élément de support d'unité (6), et
chacun des composants de support permettant la rotation (4) est préchargé.

2. Unité de moyeu équipée d'une fonction de rotation (1) selon la revendication 1, dans laquelle l'élément de support d'unité (6) comporte un joint d'articulation.

3. Unité de moyeu équipée d'une fonction de rotation (1) selon la revendication 1 ou 2, dans laquelle le composant d'assemblage de moyeu-pièce de palier (2) est disposé de manière à faire saillie vers l'extérieur dans un sens de la largeur d'un véhicule (10) par rapport à l'élément de support d'unité (6), et l'actionneur de rotation (5) est disposé de manière à faire saillie vers l'intérieur dans le sens de la largeur du véhicule (10).

4. Unité de moyeu équipée d'une fonction de rotation (1) selon l'une quelconque des revendications 1 à 3, dans laquelle le composant d'assemblage de moyeu-pièce de palier (2) et l'actionneur de rotation (5) sont directement couplés l'un à l'autre par l'intermédiaire d'une pièce d'articulation (8) configurée pour transmettre un mouvement de l'actionneur de rotation (5) au composant d'assemblage de moyeu-pièce de palier (2).

5. Unité de moyeu équipée d'une fonction de rotation (1) selon la revendication 4, dans laquelle le composant d'assemblage de moyeu-pièce de palier (2) comporte une pièce de bras faisant saillie dans une direction perpendiculaire à l'axe de rotation (A), et la pièce de bras est couplée à une pièce de sortie linéaire (25a) de l'actionneur de rotation (5), la pièce de sortie linéaire (25a) étant configurée pour avancer et reculer.

6. Véhicule (10) comprenant une unité de moyeu équipée d'une fonction de rotation (1) telle que revendiquée dans l'une quelconque des revendications 1 à 5.
